Europäisches Patentamt

European Patent Office

Office européen des brevets

(11) Veröffentlichungsnummer: **0 140 024 B1**

(12) **EUROPÄISCHE PATENTSCHRIFT**

(45) Veröffentlichungstag der Patentschrift: 08.01.92

(51) Int. Cl.⁵: **B01F 7/18**

(21) Anmeldenummer: 84110362.5

(22) Anmeldetag: 31.08.84

Die Akte enthält technische Angaben, die nach dem Eingang der Anmeldung eingereicht wurden und die nicht in dieser Patentschrift enthalten sind.

(54) **Rührer für wandnahes Rühren.**

(30) Priorität: 06.09.83 DE 3332069

(43) Veröffentlichungstag der Anmeldung:
08.05.85 Patentblatt 85/19

(45) Bekanntmachung des Hinweises auf die Patenterteilung:
08.01.92 Patentblatt 92/02

(84) Benannte Vertragsstaaten:
AT BE CH DE FR GB IT LI NL SE

(56) Entgegenhaltungen:
EP-A- 0 049 229      EP-A- 0 063 171
CH-A- 425 420        DE-A- 2 312 286
DE-A- 2 557 979      DE-B- 1 182 945
US-A- 3 635 901      US-A- 4 225 247

(73) Patentinhaber: HOECHST AKTIENGESELL-
SCHAFT
Postfach 80 03 20
W-6230 Frankfurt am Main 80(DE)

(72) Erfinder: Ott, Karl-Erich
Walddörferstrasse 263
W-2000 Hamburg 70(DE)
Erfinder: Behrens, Thomas
Döscherstrasse 7
W-2000 Hamburg 76(DE)

EP 0 140 024 B1

**Beschreibung**

Gegenstand der Erfindung ist ein Rührer für wandnahes Rühren, bei dem die Antriebswelle mehrere Rührarme aufweist, die sich radial von der Welle erstrecken und die mit Halteblechen versehen sind, an denen Rührflügel angeordnet sind.

Nach DE-A-2557979 ist ein Interferenzstrom-Rührer bekannt, bei dem das Rührblatt an seinem Ende eine Mehrzahl von Einzelblättern aufweist, die durch einen Steg miteinander verbunden sind.

Nach CH-A-425420 ist ein Mischer bekannt, dessen Leitkörper aus paarweise räumlich angeordneten Rührflügeln besteht, von denen jeweils nur einer wandnah umläuft.

Bei der Durchführung exothermer Reaktionen, z.B. Polymerisationen, in Rührkesseln sind sowohl eine gute Durchmischung als auch ein möglichst hoher Wärmeübergangswert erwünscht. Bei der Polymerisation wird beides oft dadurch erschwert, daß die Viskosität des Ansatzes mit fortschreitender Reaktion zunimmt. Während zu Beginn der Reaktion noch relativ leicht die Reaktionswärme abgeleitet werden kann, wird bei Viskositäten größer als 10 Pascal der Wärmeübergang bei Verwendung von nicht-randgängigen Rührern sehr gering, was zwangsläufig zu längeren Reaktionszeiten führt. Andererseits ist der Energieeintrag bei Verwendung der bekannten randgängigen Rührer wie Anker- und Wendelrührer, so hoch, daß dadurch die Kühlleistung merklich gemindert wird.

Der Erfindung liegt demnach die Aufgabe zugrunde, einen für niedrig- bis höherviskose Flüssigkeiten gleichermaßen geeigneten Rührer zu finden, der bei vergleichsweise minimalem Energieeintrag eine gute Durchmischung des Reaktorinhaltes und damit einen guten Wärmeübergang sicherstellt.

Die Aufgabe wird durch einen Rührer gelöst, bei dem die Rührarme mit Halteblechen versehen sind, an denen Rührflügel, angeordnet sind, dadurch gekennzeichnet, daß die Rührflügel in treppenförmiger Wendelstruktur, mit Abstand zueinander und geneigt so angeordnet sind, daß sich ihre Schattenflächen in Umlaufrichtung gesehen überlappen, mindestens jedoch berühren.

In einer Ausgestaltung sind die Rührarme teilweise als Förderorgane ausgebildet, die in entgegengesetzter Richtung geneigt sind, wie die Rührelemente. Die Förderorgane können in ihrer Länge variabel ausgebildet und die Haltebleche senkrecht zu den Rührarmen angeordnet sein. Ferner können die Haltebleche drehbar um die Rührarmachse angeordnet sein.

Im folgenden wird die Erfindung anhand von lediglich zwei Ausführungswegen darstellenden Zeichnungen näher erläutert. Es zeigt

Figur 1 eine Ansicht des Rührers, und

Figur 2 eine Aufsicht des Rührers gemäß Figur 1,

Figur 3 eine Ansicht des Rührers in alternativer Ausführung.

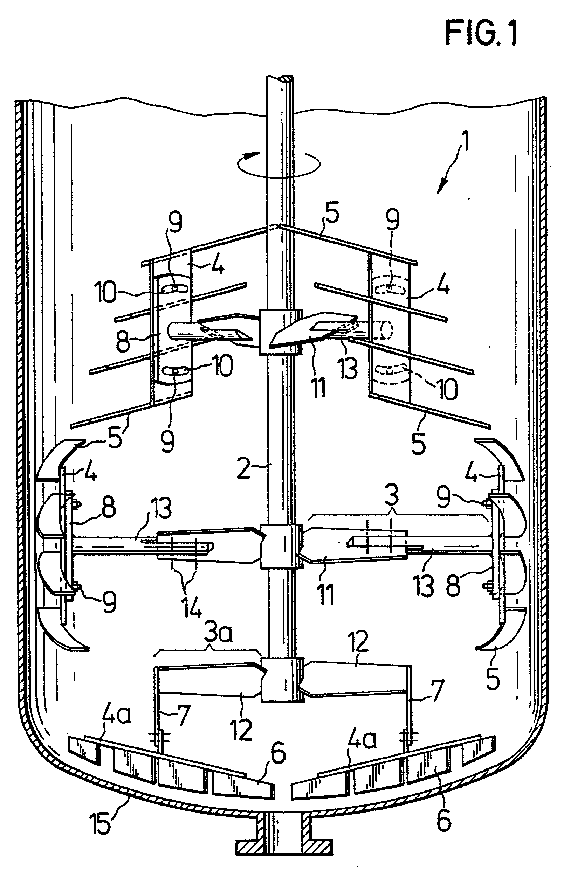

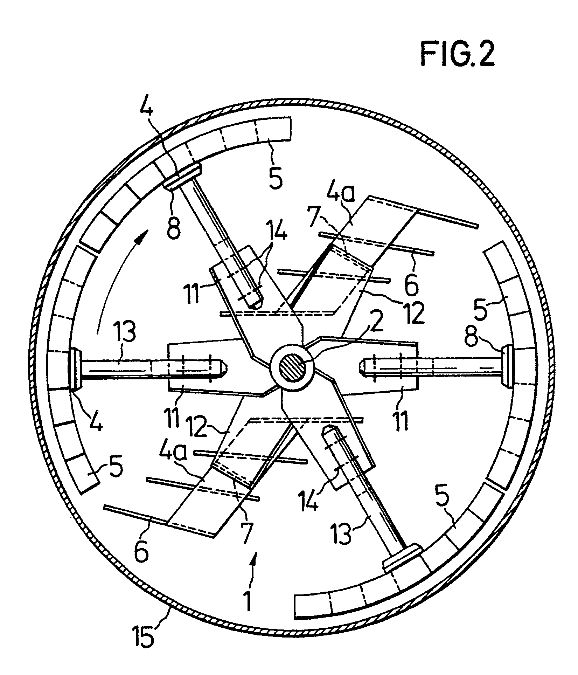

Die Antriebswelle 2 des Rührers 1 ist mit Rührarmen 3, 3a versehen. An den freien Enden der Rührarme 3, 3a sind Haltebleche 4, 4a angeordnet, die Rührflügel 5, 6 tragen. Der in Figuren 1 und 2 gezeigte Rührer weist neben wandnahen Rührflügeln 5 auch bodennahe Rührflügel 6 aus, deren Haltebleche 4a über Laschen 7 mit den Rührarmen 3a verbunden sind. Die Haltebleche 4 für die wandnahen Rührflügel 5 sind senkrecht zur Richtung der Rührarme 3 angeordnet. Die Rührarme 3 der wandnahen Rührflügel 5 können mit Flanschen 8 versehen sein, die Einrichtungen 9 (Bolzen, Schrauben oder dergleichen) aufweisen, um ein Drehen der Bleche 4 um die Rührarmachse zu ermöglichen.

Bei Verwendung von Bolzen oder Schrauben als Einrichtung 9 können die Haltebleche 4 mit entsprechenden Ausnehmungen 10 versehen sein, in denen die Einrichtungen 9 geführt werden. Die Produktumwälzung kann noch verbessert werden, wenn die Rührarme 3, 3a mindestens teilweise als Förderorgane 11, 12 ausgebildet sind. Die Förderorgane 11, 12 sind in entgegengesetzter Richtung geneigt wie die Rührflügel 5. Zwecks Änderung des Wandabstandes der Rührflügel 5 können die Rührarme 3 zur Änderung ihrer Länge geteilt sein. Gemäß Figuren 1 und 2 können die Rührarme aus einem Förderorgan 11 und einem mit Schlitz versehenen Rührarmteil 13 bestehen. Die Verbindung beider Teile ist mit 14 angedeutet. Die Rührflügel 5, 6 sind so auf den Halteblechen 4, 4a angeordnet, daß sich ihre Schattenflächen in Umlaufrichtung gesehen überlappen, mindestens jedoch berühren. 15 deutet einen Rührkessel an. Die Rührarme 3, 3a des Rührers 1 sind jeweils ca. 60° gegeneinander verdreht. Verdrehungen bis 90° sind möglich. Lediglich zu Zwecken der besseren Darstellung wurde auf die Verdrehung der Rührarme 3a der bodennahen Rührflügel 6 gegenüber den darüberliegenden Rührarmen 3 der wandnahen Rührflügel 5 in Fig. 1 verzichtet.

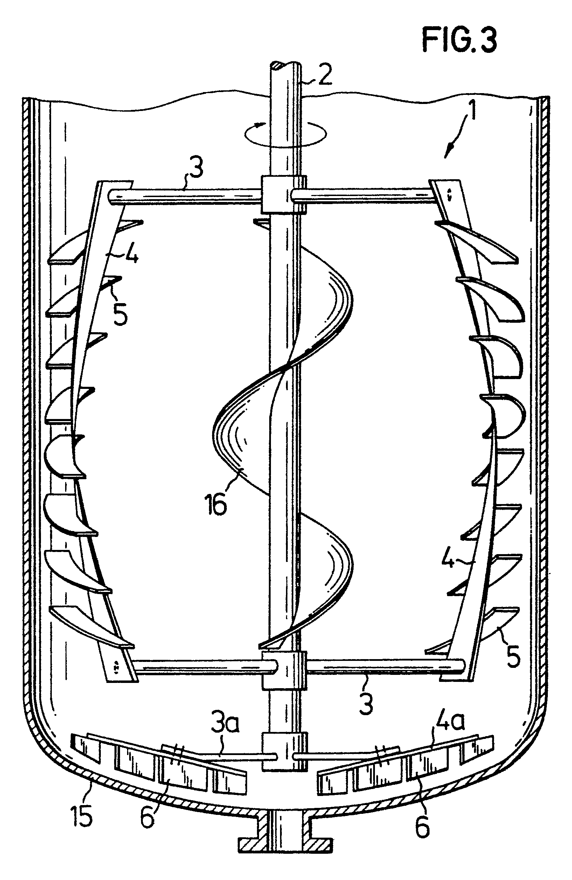

Gemäß Fig. 3 sind die Haltebleche 4 wendelförmig gebogen und verbinden die Enden der Rührarme 3. Die Antriebswelle 2 ist mit einer Wendel 16 versehen, deren Förderrichtung entgegengesetzt der Förderrichtung der Rührflügel 5 ist.

Der Rührer ist überall dort bevorzugt einzusetzen, wo es auf einen guten Wärmeübergang vom Produkt zur Behälterwand ankommt. Mit seiner Hilfe erreicht man sowohl bei dünnflüssigen als auch höher viskosen Flüssigkeiten eine intensive Umwälzung und Durchmischung. Der Rührer eignet sich insbesondere für Lösungs- und Massepolymerisation, aber auch für die Behandlung von scherempfindlichen Dispersionen und Kunstharzen aller Art.

## Patentansprüche

1. Rührer für wandnahes Rühren, bei dem die Antriebswelle radial angeordnete Rührarme aufweist, die mit Halteblechen (4,4a) versehen sind, an denen Rührflügel (5,6) angeordnet sind, dadurch gekennzeichnet, daß die Rührflügel (5,6), in treppenförmiger Wendelstruktur, zueinander und geneigt so angeordnet sind, daß sich ihre Schattenflächen in Umlaufrichtung gesehen überlappen, mindestens jedoch berühren.

2. Rührer nach Anspruch 1, dadurch gekennzeichnet, daß die Rührarme (3, 3a) teilweise als Förderorgane (11, 12) ausgebildet sind, die in entgegengesetzter Richtung geneigt sind, wie die Rührflügel (5)

3. Rührer nach Anspruch 1, dadurch gekennzeichnet, daß die Rührarme (3) in ihrer Länge variable ausgebildet sind.

4. Rührer nach Ansprüchen 1 bis 3, dadurch gekennzeichnet, daß die Halsbleche (4) senkrecht zu den Rührarmen (3) angeordnet sind.

5. Rührer nach den Ansprüchen 1 und 2, dadurch gekennzeichnet, daß die Haltebleche (4) drehbar um ihre zugehörige Rührarmachse angeordnet sind.

6. Rührer nach Anspruch 1, dadurch gekennzeichnet, daß die Antriebswelle 2 mit einer Wendel 16 versehen ist.

## Claims

1. A stirrer for stirring near a vessel wall, the drive shaft having radially arranged stirrer arms, which are provided with holding plates (4, 4a) on which stirring blades (5, 6) are arranged, wherein the stirring blades (5, 6), in a stepped helical structure, are arranged at a distance and inclined relative to one another, in such a way that their shadow areas overlap in the direction of revolution or at least are contiguous.

2. The stirrer as claimed in claim 1, wherein some of the stirrer arms (3, 3a) are designed as conveying elements (11, 12) which are inclined in the direction opposite to that of the stirring elements (5).

3. The stirrer as claimed in claim 1, wherein the stirrer arms (3) are designed to have a variable length.

4. The stirrer as claimed in claims 1 to 3, wherein the plates (4) are arranged perpendicular to the stirrer arms (3).

5. The stirrer as claimed in claims 1 and 2, wherein the plates (4) are arranged to be rotatable about their respective stirrer arm axis.

6. The stirrer as claimed in claim 1, wherein the drive shaft 2 is provided with a helix 16.

## Revendications

1. Agitateur pour réaliser une agitation à proximité de parois, dans lequel l'arbre d'entraînement comporte des bras d'agitation radiaux, qui sont pourvus de tôles de fixation (4,4a), sur lesquelles sont disposées des pales d'agitation (5,6), caractérisé en ce que les pales d'agitation (5,6) sont inclinées et disposées à distance les unes des autres, selon une disposition hélicoïdale en escalier, de sorte que leurs surfaces apparentes dans la direction circonférentielle se chevauchent ou tout au moins sont en contact.

2. Agitateur selon la revendication 1, caractérisé en ce que les bras d'agitation (3,3a) sont réalisés en partie sous la forme d'organes d'entraînement (11,12), qui sont inclinés dans une direction opposée à celle des pales d'agitation (5).

3. Agitateur selon la revendication 1, caractérisé en ce que la longueur des bras d'agitation (3) est variable.

4. Agitateur selon les revendications 1 à 3, caractérisé en ce que les tôles de fixation (4) sont disposées perpendiculairement aux bras d'agitation (3).

5. Agitateur selon les revendications 1 et 2, caractérisé en ce que les tôles de fixation (4) sont montées de manière à pouvoir tourner autour des axes associés des bras d'agitation.

6. Agitateur selon la revendication 1, caractérisé en ce que l'arbre d'entraînement (2) est équipé d'une hélice (16).

FIG.1

# FIG.2

FIG.3